# EUROPÄISCHE PATENTANMELDUNG

(11) **EP 1 450 083 A1**
(43) Veröffentlichungstag der Anmeldung: **25.08.2004**
(21) Anmeldenummer: 04003327.6
(22) Anmeldetag: 14.02.2004
(51) Int. Cl.: F16K 1/46, G05D 23/02

(54) **Mischventil**

(30) Priorität: 24.02.2003 DE 10307963
(71) Anmelder: Grohe Water Technology AG & Co. KG, 58675 Hemer (DE)
(72) Erfinder: Frankholz, Christian, 58730 Fröndenberg (DE); Gürtner, Michael, 79346 Endingen (DE)

(57) **Zusammenfassung**

Bei einem Mischventil mit einem, wenigstens je eine Öffnung (10,11,12) für das zufließende Kalt- und Heißwasser und das abfließende Wasser aufweisenden Gehäuse (1), in dem jeweils ein ringförmiger Ventilsitz (3,4) für Kalt- und Heißwasser mit Abstand zueinander vorgesehen ist, wobei zwischen den beiden Ventilsitzen (3,4) ein axial verschiebbarer Ventilkörper (2) derart ausgebildet und angeordnet ist, dass durch eine Axialbewegung des Ventilkörpers (2) die Einlassquerschnitte für Kalt- und Heißwasser gegenläufig änderbar sind, ist vorgeschlagen, dass wenigstens ein Ventilsitz (3,4) in seiner ringförmigen Sitzfläche zu einem Teil von einem, aus der Ebene der Sitzfläche mit einem Bereich vorstehenden gummielastischen Ring (6) gebildet ist, so dass der Ventilkörper (2) beim Absperrvorgang vor dem Aufsitzen auf dem Ventilsitz (3,4) den Ring (6) zur Abdichtung elastisch verformt.

## Beschreibung

Die Erfindung betrifft ein Mischventil mit einem, wenigstens jeweils eine Öffnung für das zufließende Kalt- und Heißwasser und das abfließende Wasser aufweisenden Gehäuse, in dem jeweils ein ringförmiger Ventilsitz für Kalt- und Heißwasser mit Abstand zueinander vorgesehen ist, wobei zwischen den beiden Ventilsitzen ein axial verschiebbarer Ventilkörper derart ausgebildet und angeordnet ist, dass durch eine Axialbewegung des Ventilkörpers die Einlassquerschnitte für Kalt- und Heißwasser gegenläufig änderbar sind.

Ein Mischventil dieser Art ist aus der deutschen Offenlegungsschrift DE 100 07 906 A1 bekannt. Bei diesem thermostatgeregelten Mischventil sind der Ventilkörper und die beiden Ventilsitze für Kalt- und Heißwasser aus Metall hergestellt. Bei einem Ausfall des Drucks in der Kaltwasserversorgungsleitung kann es hierbei, infolge eines nicht völlig absperrbaren Heißwasserwassereinlassquerschnitt aufgrund von Fertigungstoleranzen etc. des Ventilkörpers und des Ventilsitzes, zu einem unzulässigen Austritt von Heißwasser kommen.

Dies ist insbesondere äußerst unerwünscht bei Sanitärduschen, wegen einer Verbrühungsgefahr.

Der Erfindung liegt die Aufgabe zugrunde, dass im Oberbegriff angegebenen Mischventil so auszubilden, dass ein völliges Absperren einer der beiden Zuflüsse sicher mit einfachen Mitteln erreichbar ist.

Diese Aufgabe wird erfindungsgemäß bei einem gattungsgemäßen Mischventil dadurch gelöst, dass wenigstens ein Ventilsitz in der ringförmigen Sitzfläche zu einem Teil von einem, aus der Ebene der Sitzfläche vorstehenden gummielastischen Ring gebildet ist, so dass der Ventilkörper beim Absperrvorgang vor dem Aufsitzen auf dem Ventilsitz den Ring zur Abdichtung elastisch verformt.

Weitere Ausgestaltungen der Erfindung sind in den Ansprüchen 2 bis 12 angegeben.

Mit den erfindungsgemäßen Maßnahmen wird insbesondere erreicht, dass der in einem Teilringbereich des jeweiligen Ventilsitzes angeordnete gummielastische Ring eine völlige Absperrung eines Einlassquerschnittes bewirkt, unabhängig von Fertigungstoleranzen, Oberflächenrauhigkeiten etc. der aus Kunststoff oder Metall hergestellten Ventilsitze und des Ventilkörpers.

In weiterer Ausgestaltung der Erfindung kann vorteilhaft ein separater gummielastischer Ring verwendet werden, der in einer Ringnut im Ventilsitz gehalten wird. In einer bevorzugten Ausbildung ist die Ringnut im Querschnitt trapezförmig ausgebildet und weist einen in Richtung auf die Ventilsitzfläche verjüngten Bereich auf. Als Ring kann hierbei zweckmäßig ein O-Ring mit einer Härte von 75 - 90 Shore A eingesetzt werden, wobei in der Stecklage in der Ringnut der O-Ring von den schräg angeordneten Seitenflächen zu 20% bis 30% seines Querschnittes verpresst wird, wodurch einerseits ein unzulässiges Herausrutschen aus der Ringnut verhindert wird und andererseits beim Überströmen von Wasser eine Geräuschbildung durch Schwingen des O-Ringes unterbunden wird.
Die Ringnut im Ventilsitz wird zweckmäßig so angeordnet, dass der Anteil des Ringes 40% bis 60% der gesamten Fläche des Ventilsitzes bildet.
Um eine gute Abdichtung zwischen Ventilsitz und Ventilkörper herzustellen, ist es ausreichend wenn der Ring in der Absperrposition zu etwa 10% bis 20% seines Querschnittes verpresst wird.
Zur Erleichterung der Einbringung des O-Ringes in die Ringnut kann diese vor der Einmontage eine erweiterte Öffnung haben, die nach dem Einbringen des O-Ringes durch eine Bördelung einer Seitenwand verengt wird, so dass der O-Ring danach die erforderliche Verpressung in der Ringnut hat.
In einer bevorzugten Ausführung der Erfindung kann die eine Seitenwand der Ringnut durch einen an der Innenwandung des Ventilsitzes einbringbaren Innenring gebildet sein, hierbei kann der Innenring in einfacher Weise durch einen Presssitz oder durch ein Gewinde in der Stecklage fixiert werden.

Ausführungsbeispiele der Erfindung sind in der Zeichnung dargestellt und werden im Folgenden näher beschrieben.

Es zeigt in der Zeichnung,
- Figur 1: ein thermostatgeregeltes Mischventil im Längsschnitt;
- Figur 2: einen Ausschnitt II des Kaltwasserventilsitzes des in Figur 1 gezeigten Mischventils in vergrößerter Darstellung;
- Figur 3: einen Ausschnitt III des Heißwasserventilsitzes des in Figur 1 gezeigten Mischventils in vergrößerter Darstellung;
- Figur 4: ein anderes Ausführungsbeispiel des in Figur 3 gezeigten Heißwasserventilsitzes;
- Figur 5: ein weiteres Ausführungsbeispiel des in Figur 3 gezeigten Heißwasserventilsitzes.

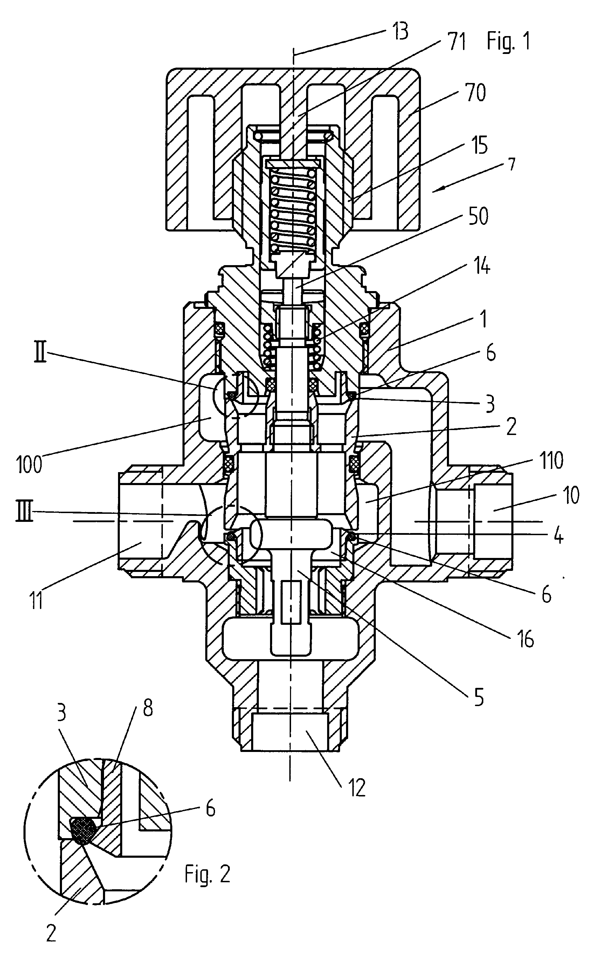

Der Einfachheit halber sind bei den Ausführungsbeispielen in der Zeichnung gleiche oder entsprechende Elemente mit jeweils gleichem Bezugszeichen versehen.
Das in Figur 1 bis 3 gezeigte thermostatgeregelte Mischventil weist ein Gehäuse 1 auf. In dem Gehäuse 1 ist auf einer Achse 13 eine Durchgangsbohrung angeordnet, in der ein hülsenförmiger Ventilkörper 2 zusammen mit einem Thermostaten 5 axial begrenzt verschiebbar zwischen einem Ventilsitz 3 für Kaltwasser und einem Ventilsitz 4 für Heißwasser vorgesehen ist. Der Thermostat 5 ist dabei formschlüssig mit dem Ventilkörper 2 verbunden und wird mit Hilfe einer Rückstellfeder 14 mit einem axial auslenkbaren Stößel 50 gegen eine Temperaturvorwähleinrichtung 7 gedrückt. Die Temperaturvorwähleinrichtung 7 weist einen Drehgriff 70 auf, der mit Hilfe eines Bewegungsgewindes 80 axial zum Gehäuse 1 bewegbar ist, wobei der Drehgriff 70 mit einem zentralen Zapfen 71 über den Stößel 50 den Ventilkörper 2 in der erforderlichen Axialposition zwischen den beiden Ventilsitzen 3, 4 zur Erzeugung eines bestimmten Mischungsverhältnisses von Kalt- und Heißwasser bzw. einer bestimmten Temperatur des Mischwassers hält.
Senkrecht zur Achse 13 ist diametral gegenüberliegend eine Öffnung 10 für den Zufluss von Kaltwasser und eine Öffnung 11 für den Zufluss von Heißwasser im Gehäuse 1 ausgebildet. Die Öffnung 10 ist dabei mit einem ringförmigen Gehäusekanal 100 für Kaltwasser und die Öffnung 11 mit einem ringförmigen Gehäusekanal 110 für Heißwasser verbunden. Im Gehäusekanal 100 ist konzentrisch der ringförmig ausgebildete Ventilsitz 3 für Kaltwasser und im Gehäusekanal 110 ist entsprechend der ringförmige Ventilsitz 4 für Heißwasser angeordnet. Der hülsenförmige Ventilkörper 2 ist konzentrisch zur Achse 13 angeordnet, wobei die beiden gegenüberliegenden Stirnseiten des Ventilkörpers 2 mit den entsprechenden Stirnseiten der Ventilsitze 3, 4 einerseits einen Kaltwassereinlass und andererseits einen Heißwassereinlass in eine zentrale Mischkammer 16 bilden, derart, dass in Abhängigkeit von einer Axialbewegung des Ventilkörpers 2 die Einlassquerschnitte für Kaltwasser und Heißwasser gegenläufig verändert werden. Mit der Temperaturvorwähleinrichtung 7 kann somit über eine Drehbewegung des Drehgriffes 70 die entsprechende Temperatur des Mischwassers voreingestellt werden. Wird hierbei bei der Mischwasserentnahme von dem Thermostaten 5 eine Temperaturabweichung erfühlt, so erfährt der Stößel 50 eine entsprechende axiale Auslenkung, so dass die Einlassquerschnitte für Kaltwasser und Heißwasser entsprechend verändert werden und die Mischwassertemperatur dem Sollwert wieder angenähert wird.
Das in der Mischkammer 16 erzeugte Mischwasser wird über eine auf der Achse 13 angeordnete Öffnung 12 aus dem Gehäuse 1 herausgeführt.

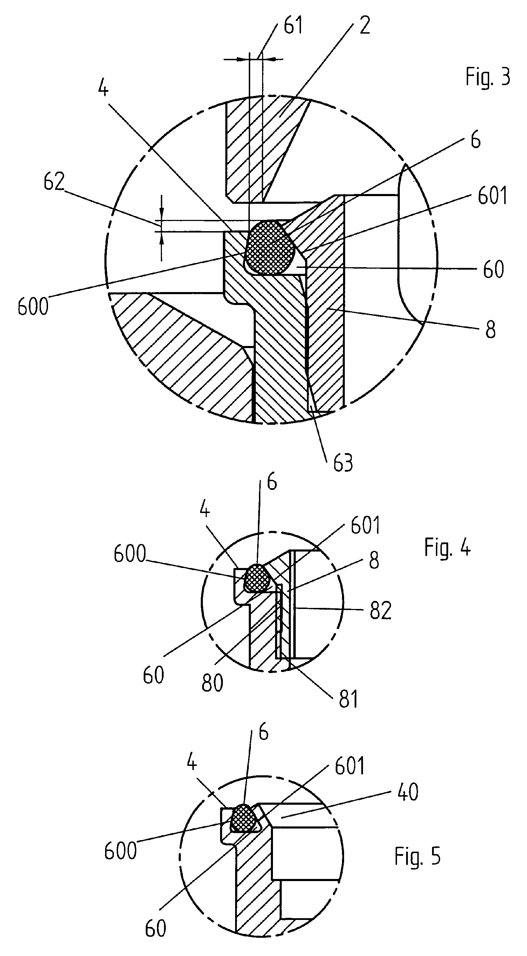

Bei dem Betrieb des vorstehend aufgeführten Mischventils kann es auftreten, dass der Druck im Versorgungsleitungsnetz für das zufließende Heißwasser oder das zufließende Kaltwasser zusammenbricht. In diesem Falle muss sichergestellt werden, dass von dem Mischventil auch das andere unter Druck zugeführte Heiß- oder Kaltwasser abgesperrt wird. Insbesondere wenn das zugeführte, unter Druck stehende Heißwasser, obwohl eine niedrigere Temperatur an der Temperaturvorwähleinrichtung eingestellt ist, ohne Beimischung von Kaltwasser über die Öffnung 12 abgegeben wird, besteht eine Verbrühungsgefahr.
Aus diesem Grund tragen die Ventilsitze 3, 4 jeweils einen gummielastischen Ring 6, der geringfügig aus der Ebene des Ventilsitzes 3, 4 vorsteht, wie es insbesondere aus Figur 3 der Zeichnung zu entnehmen ist. Bevor die Stirnseite des Ventilkörpers 2 auf der Ebene des Ventilsitzes 3 oder 4 zur Anlage gelangt, wird somit vorher der gummielastische Ring 6 entsprechend verformt und bewirkt hierdurch eine Abdichtung des Einlassquerschnitts, wobei Fertigungstoleranzen, Oberflächenrauhigkeiten etc. von dem gummielastischen Ring 6 kompensiert werden, wie es aus Figur 2 der Zeichnung zu entnehmen ist.
Als gummielastischer Ring 6 ist ein O-Ring mit einer Hörte von 75 - 90 Shore A vorgesehen, der im Querschnitt kreisförmig ausgebildet ist und jeweils in einer Ringnut 60 der Ventilsitze 3, 4 angeordnet ist. Die Ringnut 60 weist dabei eine parallel zur Ebene des Ventilsitzes 3, 4 verlaufende Grundfläche auf, an der sich zwei im Querschnitt trapezförmig angeordnete Seitenwände 600, 601 anschließen, so dass die Ringnut 60 sich verjüngend zur Ebene der Ventilsitze 3, 4 erstreckt. Die eine Seitenwand 601 ist dabei an einem Innenring 8 angeformt, wobei der Innenring mit Hilfe einer Presspassung in eine Bohrung 62 der Ventilsitze 3, 4 einpressbar ist. Die Seitenwand 601 des Innenringes 8 ist dabei so dimensioniert, dass der Ring 6 in der Ringnut 60 zu 20% bis 30% des kreisförmigen Querschnittes verformt wird, wie es insbesondere aus Figur 3 der Zeichnung zu entnehmen ist, so dass der Ring 6 einerseits sicher gegen ein Herausrutschen gehalten und andererseits ein von dem vorbeiströmenden Wasser angeregtes Schwingen des O-Ringes, welches eine Geräuschbildung verursachen kann, sicher ausgeschlossen wird.
Damit einerseits eine sichere Abdichtung mit dem Ring 6 erzielbar und andererseits mit dem starren Bereich des aus Kunststoff oder Metall bestehenden Ventilsitzes 3, 4 der Einlassquerschnitt für Kalt- oder Heißwasser bestimmbar ist, hat es sich als zweckmäßig erwiesen, wenn der Ring 6 einen Anteil 61 von 40% bis 60% der gesamten Fläche des Ventilsitzes 3, 4 bildet. Außerdem hat es sich als ausreichend erwiesen, wenn die mögliche Verpressung 62 des Ringes 6 etwa 10% bis 20% seines Querschnittes beträgt.

In Figur 4 ist ein abgewandeltes Ausführungsbeispiel eines Ventilsitzes 4 für Heißwasser dargestellt. Die Ausbildung unterscheidet sich zu der in Figur 3 gezeigten Ausbildung im Wesentlichen lediglich dadurch, dass der Innenring 8 mit einem Gewinde 80 in dem Ventilsitz 4 gehalten ist. Der Innenring 8 liegt dabei in seiner Einbauposition an einer Schulter 81 des Ventilsitzes 4 an. Außerdem weist der Innenring 8 an der Innenwandung eine Nut 82 für den Angriff eines Drehwerkzeuges auf.

In Figur 5 ist ein weiteres Ausführungsbeispiel eines Ventilsitzes 4 dargestellt. Die Ringnut 60 für die Aufnahme des gummielastischen Ringes 6 ist dabei zunächst so ausgebildet, dass der Ring 6 zwanglos in die Ringnut 60 eingelegt werden kann. Im Anschluss daran wird eine innere Seitenwand 40 durch einen Bördelvorgang der äußeren Seitenwand 600 angenähert, so dass im Querschnitt die Ringnut 60 die trapezförmige Ausbildung aufweist und der gummielastische Ring 6 die erforderliche Verpressung von 20% bis 30% der Kreisfläche erhält.

## Patentansprüche

1. Mischventil mit einem, wenigstens je eine Öffnung (10,11,12) für das zufließende Kalt- und Heißwasser und das abfließende Wasser aufweisenden Gehäuse (1), in dem jeweils ein ringförmiger Ventilsitz (3,4) für Kalt- und Heißwasser mit Abstand zueinander vorgesehen ist, wobei zwischen den beiden Ventilsitzen (3,4) ein axial verschiebbarer Ventilkörper (2) derart ausgebildet und angeordnet ist, dass durch eine Axialbewegung des Ventilkörpers (2) die Einlassquerschnitte für Kalt- und Heißwasser gegenläufig änderbar sind, **dadurch gekennzeichnet, dass** wenigstens ein Ventilsitz (3, 4) in seiner ringförmigen Sitzfläche zu einem Teil von einem, aus der Ebenen der Sitzfläche mit einem Bereich vorstehenden gummielastischen Ring (6) gebildet ist, so dass der Ventilkörper (2) beim Absperrvorgang vor dem Aufsitzen auf dem Ventilsitz (3, 4) den Ring (6) zur Abdichtung elastisch verformt.

2. Mischventil nach Anspruch 1, **dadurch gekennzeichnet, dass** der Ventilsitz (4) für Heißwasser mit dem Ring (6) versehen ist.

3. Mischventil nach Anspruch 1 oder 2, **dadurch gekennzeichnet, dass** der Ring (6) in einer umlaufenden Ringnut (60) des Ventilsitzes (3, 4) angeordnet ist.

4. Mischventil nach Anspruch 3, **dadurch gekennzeichnet, dass** die Ringnut (60) im Querschnitt trapezförmig ausgebildet ist, wobei die Seitenwände (600, 601) in der Ebene des Ventilsitzes (3, 4) den geringsten Abstand zueinander haben.

5. Mischventil nach Anspruch 3 oder 4, **dadurch gekennzeichnet, dass** als Ring (6) ein O-Ring mit einer Härte von 75 - 90 Shore A vorgesehen ist.

6. Mischventil nach wenigstens einem der vorhergehenden Ansprüche, **dadurch gekennzeichnet, dass** die Ringnut (60) so angeordnet ist, dass der Anteil (61) des Ringes (6) 40% bis 60% der gesamten Fläche des Ventilsitzes (3, 4) bildet.

7. Mischventil nach wenigstens einem der vorhergehenden Ansprüche, **dadurch gekennzeichnet, dass** die maximale Verpressung (62) des Ringes (6) 10% bis 20% seines Querschnittes beträgt.

8. Mischventil nach wenigstens einem der vorhergehenden Ansprüche, **dadurch gekennzeichnet, dass** der Ring (6) in der Ringnut (60) zu 20% bis 30% seiner Kreisfläche verpresst ist.

9. Mischventil nach wenigstens einem der vorhergehenden Ansprüche, **dadurch gekennzeichnet, dass** der Ring (6) in der Ringnut (60) durch einen Bördelvorgang an einer inneren Seitenwand (40) des ringförmigen Ventilsitzes (3, 4) in der Ringnut (60) vorgespannt ist.

10. Mischventil nach wenigstens einem der vorhergehenden Ansprüche, **dadurch gekennzeichnet, dass** die Ringnut (60) durch einen in den Ventilsitz (3, 4) einbringbaren Innenring (8) gebildet ist.

11. Mischventil nach Anspruch 10, **dadurch gekennzeichnet, dass** der Innenring (8) in dem Ventilsitz (3, 4) eingepresst ist.

12. Mischventil nach Anspruch 10, **dadurch gekennzeichnet, dass** der Innenring (8) in den Ventilsitz (3, 4) mit Gewinde (80) eingeschraubt ist.
